# EUROPEAN PATENT APPLICATION

(11) **EP 2 511 797 A1**
(43) Date of publication of application: **17.10.2012**
(21) Application number: 10835800.3
(22) Date of filing: 05.11.2010
(51) Int. Cl.: G06F 3/041, G02F 1/133, G02F 1/1333, G02F 1/135, G06F 3/042

(54) **OPTICAL SENSOR CIRCUIT, TWO-DIMENSIONAL COORDINATE DETECTION APPARATUS, INFORMATION PROCESSING APPARATUS, AND METHOD OF REFRESH-DRIVING OPTICAL SENSOR ELEMENT**

(30) Priority: 11.12.2009 JP 2009282186
(71) Applicant: Sharp Kabushiki Kaisha, Osaka-shi, Osaka 545-8522 (JP)
(72) Inventor: KITAGAWA, Hideki, Osaka-shi, Osaka 545-8522 (JP); WATANABE, Takuya, Osaka-shi, Osaka 545-8522 (JP); IMAI, Hajime, Osaka-shi, Osaka 545-8522 (JP); NISHIYAMA, Yukihiko, Osaka-shi, Osaka 545-8522 (JP); MURAI, Atsuhito, Osaka-shi, Osaka 545-8522 (JP); MORIMOTO, Kazunori, Osaka-shi, Osaka 545-8522 (JP)
(74) Representative: Goddar, Heinz J.
(86) International application number: PCT/JP2010/069721
(87) International publication number: WO 2011/070878

(57) **Abstract**

An optical sensor circuit in accordance with the present invention detects, based on a change in the amount of light received when a pointer (P) is placed in a coordinate detection area (2) through which light from a light source (3) passes, coordinates of a position of the pointer (3) in the coordinate detection area (2). A first optical sensor circuit including an optical sensor element (41), which receives a larger amount of light due to its position relative to the light source (3), has a first wire to which a refresh signal (Shield_A) is supplied, the refresh signal (Shield_A) initializing a threshold characteristic that determines light sensitivity of the optical sensor element (41); whereas a second optical sensor circuit including an optical sensor element (42), which receives a smaller amount of light, has a second wire to which a refresh signal (Shield_B) is supplied independently of the refresh signal (Shield_A), the refresh signal (Shield_B) initializing a threshold characteristic of the optical element (42).

## Description

### Technical Field

The present invention mainly relates to an optical two-dimensional coordinate detection apparatus, an optical sensor circuit which is included in the two-dimensional coordinate detection apparatus and which optically detects coordinates of a pointer near the two-dimensional coordinate detection apparatus, and a method of refresh-driving for initializing a threshold characteristic of an optical sensor element included in the optical sensor circuit.

### Background Art

### (Touch panel)

Conventionally, there has been known a display device having a function of a touch panel (coordinate sensor), which is capable of detecting a position of a pointer such as a finger or an input stylus when the pointer makes contact with a surface of a display panel. Among such display devices, a display device including a so-called resistive film type touch panel or capacitive type touch panel has been used most commonly.

However, such a display device has the following problems. For example, since such a display device requires a special kind of a panel for position detection, the thickness of the device as a whole increases. Further, providing such a touch panel on a screen of the display device causes a reduction in visibility.

### (Optical coordinate detection apparatus 1)

In view of such circumstances, there has been recently developed an optical coordinate detection apparatus that does not need such a touch panel. This coordinate detection apparatus includes the following instead of the resistive film type touch panel or the capacitive type touch panel. That is, the coordinate detection apparatus includes, in a display panel, (i) a light source and (ii) a photoreceptor (optical sensor element) such as a photodiode or a phototransistor which outputs information on a position of a pointer by detecting whether the pointer blocks light emitted from the light source.

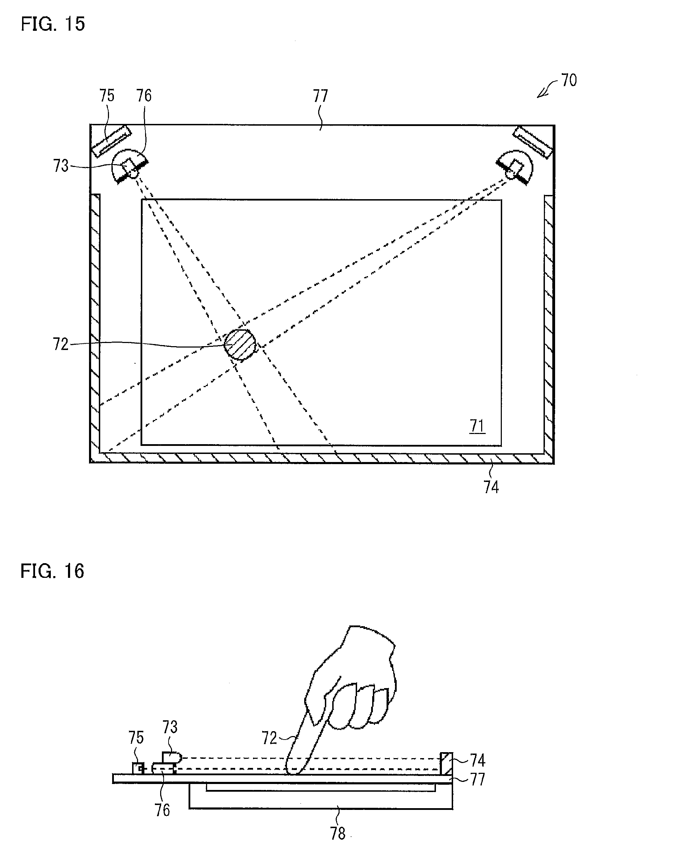

A specific example of such a coordinate detection apparatus is disclosed in for example Patent Literature 1 stated below. As illustrated in Fig. 15, an optical digitizer 70 disclosed in Patent Literature 1 is capable of detecting coordinates of a position pointed at by a pointer 72 in a detection plane 71. To achieve this, the optical digitizer 70 includes (i) an LED 73 for emitting a light beam, (ii) a retroreflection member 74 which is provided so as to surround at least three sides of the detection plane 71 and which retro-reflects the light beam emitted from then LED 73, (iii) a linear image sensor 75 for picking up an image of the pointer 72 by utilizing the light beam retro-reflected by the retroreflection member 74 and converting the image into an electric signal and (iv) an image formation lens 76 for forming the image on the linear image sensor 75.

The LED 73, the linear image sensor 74 and the image formation lens 75 constitute a detection unit, and two of such detection units are provided in two respective positions on a plane where there is a surface of a transparent input flat plate 77 that constitutes the detection plane 71.

As illustrated in Fig. 16, a display device 78 having a display surface is provided below the detection plane 71. This achieves a touch panel-including display device.

According to the above configuration, when a light beam emitted from the LED 73 strikes the retroreflection member 74 provided around the detection plane 71, the light beam is reflected so as to go back straight in a direction from which the light beam traveled, because of the retroreflection characteristic of the retroreflection member 74. In a case where the pointer 72 is placed on the detection plane 71, the pointer 72 blocks the light beam. Accordingly, a shadow of the pointer 72 is formed on the linear image sensor 75, which shadow represents a direction of the pointer 72 relative to the LED 73. An image of the shadow representing the direction is picked up and converted into an electric signal by the linear image sensor 75. Such processes are carried out in both of the detection units provided on the right and left. Further, these electric signals are subjected to calculation based on the principle of triangulation. In this way, it is possible to detect the coordinates of a position pointed at by the pointer 72.

### (Optical coordinate detection apparatus 2)

On the other hand, Patent Literature 2 stated below discloses a light-matrix optical coordinate reader. Specifically, infrared-emitting elements such as light emitting diodes serving as light sources are arranged at regular intervals in one of a pair of sides opposite to each other via a rectangular-shaped coordinate detection area, and infrared-receiving elements such as phototransistors serving as light receiving parts are arranged at regular intervals in the other of the pair of the sides. The light sources and the light receiving parts are arranged in the same manner also in another pair of opposite sides.

According to this configuration, when infrared light that is emitted from the infrared-emitting elements and travels in straight lines toward the infrared-receiving elements via the coordinate detection area is blocked by a finger etc., a change occurs in illuminance in the light receiving parts. Based on the change in illuminance, statistical processing is carried out. In this way, a position pointed at by the finger etc. in the coordinate detection area is recognized as average coordinates (X, Y), which are calculated from the amounts of infrared light distributed all over the light receiving parts.

### Citation List

### Patent Literatures

Patent Literature 1
   Japanese Patent Application Publication, Tokukai, No. 2001-290602 A (Publication Date: October 19, 2001)
Patent Literature 2
   Japanese Utility Model Application Publication, Jitsukaihei, No. 6-75035 U (Publication Date: October 21, 1994)

### Summary of Invention

### Technical Problem

Under such circumstances, it is possible to consider a coordinate detection apparatus obtained by applying a light matrix system such as that disclosed in Patent Literature 2 to the coordinate detection apparatus of Patent Literature 1 which specifies the coordinates based on the principle of triangulation.

In such a case, it is possible to consider a light matrix coordinate detection apparatus based on the principle of triangulation, which is achieved by (i) leaving the two LEDs 73 unchanged, (ii) omitting the linear image sensors 75, the retroreflection member 74 and the image formation lenses 76 and (iii) arranging optical sensor elements such as phototransistors at regular intervals in the three sides instead of the retroreflection member 74.

However, the inventors of the present invention have found that this hypothetical configuration raises the following problem, as a result of their study on this configuration.

Specifically, the problem is as follows. Depending on the positions of the optical sensor elements relative to the light sources, variations occur in the amounts of light received by the optical sensor elements arranged in the three sides. Such variations in the amount of light cause variations in threshold characteristics of the phototransistors constituting the optical sensor elements. The variations in the threshold characteristics increase as the total amount of time during which the optical sensor elements receive light increases. This will result in a difference between light sensitivities of the optical sensor elements, and the accuracy of position detection decreases over time.

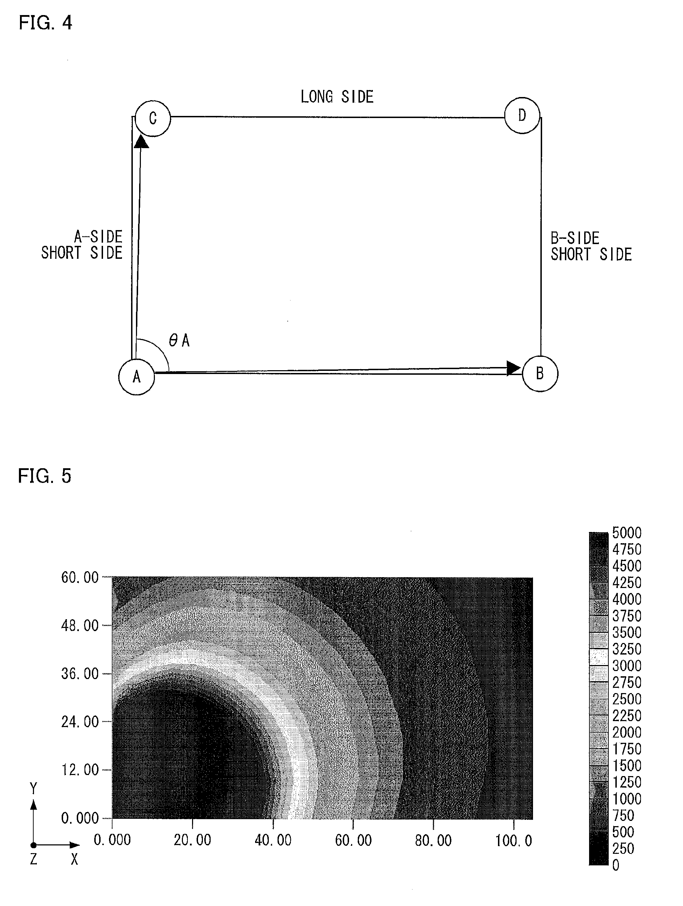

The following description discusses more specifically the above problem with reference to Fig. 4. Assume that, as illustrated in Fig. 4, light sources such as LEDs are provided at a corner A and at a corner B, respectively, of a rectangular coordinate detection area, and a plurality of optical sensor elements are arranged along a A-side short side, a B-side short side and on a long side.

In this case, an optical sensor element irradiated with light by the light source at the corner A at the shortest distance is the one in a position C, which is near a corner that is paired with the corner A on the A-side short side. This is because the light source at the corner A emits light in the form of a sector with an acute angle θA.

Further, since the light source at the corner B emits light in the same manner, an optical sensor element irradiated with light by the light source at the corner B at the shortest distance is the one in a position D, which is near a corner that is paired with the corner B on the B-side short side.

On the other hand, optical sensor elements arranged along the A-side short side receive little of the light emitted from the light source at the corner A. Similarly, optical sensor elements arranged along the B-side short side receive little of the light emitted from the light source at the corner B.

Accordingly, in general, optical sensor elements arranged along the long side opposite to the long side along which the two light sources are provided receive a larger amount of light than optical sensor elements arranged along the A-side short side and the B-side short side do. As a result, thresholds of the optical sensor elements arranged along the long side are easier to shift than those of the optical sensor elements arranged along the A-side short side and on the B-side short side.

Further, assume that the two light sources are blinked by supplying driving currents having pulse sequences. If the two light sources are blinked alternately, a time during which the optical sensor elements arranged along the short sides are irradiated with light is half as long as that for the optical sensor elements arranged along the long side. If the two light sources are blinked simultaneously in synchronization with each other, then the amount of light received by the optical sensor elements arranged along the short sides is about half as large as the amount of light received by the optical sensor elements arranged along the long side. Therefore, the optical sensor elements arranged along the short sides suffer from lesser shifting of thresholds than the optical sensor elements arranged along the long side. As a result, variations in shifting of the thresholds further increase.

The present invention has been made in view of the problem. The present invention relates to a coordinate detection apparatus using optical sensor elements to detect coordinates, which optical sensor elements receive different amounts of light depending on their positions relative to a light source whose position is fixed so that the light source emits light. An object of the present invention to provide an optical sensor circuit capable of reducing variations in threshold characteristics of the optical sensor elements, and to also provide a two-dimensional coordinate detection apparatus and an information processing apparatus each including the optical sensor circuit, and a method of refresh-driving an optical sensor element.

### Solution to Problem

In order to attain the above object, an optical sensor circuit in accordance with the present invention is
(1) an optical sensor circuit for detecting, based on a change in the amount of light received when an object to be detected is placed in a coordinate detection area through which light passes, coordinates of a position of the object in the coordinate detection area, said optical sensor circuit including:
(2) a first optical sensor circuit including a first optical sensor element;
(3) a second optical sensor circuit including a second optical sensor element;
(4) a first wire to which a first control signal is supplied, the first control signal initializing a threshold characteristic that determines light sensitivity of the first optical sensor element; and
(5) a second wire to which a second control signal is supplied independently of the first control signal, the second control signal initializing a threshold characteristic that determines light sensitivity of the second optical sensor element.

In a case where the threshold characteristic of the first optical sensor element and the threshold characteristic of the second optical sensor element become different from each other due to some cause in the above configuration, the light sensitivities of the optical sensor elements become different from each other. This makes it impossible to output detection signals of the same strength in correspondence with the same amount of received light. If this is the case, the optical sensor circuit is unable to operate as intended.

According to the configuration, even if such variations occur in the threshold characteristics, it is possible to supply the first and second control signals independently to the respective first and second optical sensor elements via the respective first and second wires. This makes it possible to supply, independently to the respective first and second optical sensor elements, the different control signals having strengths changed according to the threshold characteristics of the first and second optical sensor elements.

This makes it possible to easily and accurately reduce variations in the threshold characteristics of the respective optical sensor elements. This further makes it possible to easily cause the optical sensor elements to have the same light sensitivity.

Further, if the threshold characteristics of the respective optical sensor elements are equally initialized regardless of the amount of light they receive, an optical sensor element whose threshold shifts by a small amount may be subjected to excessive initialization. In this regard, the present invention also brings about an effect of preventing such excessive initialization. This makes it possible for the optical sensor circuit of the present invention to carry out accurate detection operation.

A two-dimensional coordinate detection apparatus in accordance with the present invention includes:
(1) a coordinate detection area associated with two-dimensional coordinates;
(2) two light sources provided at a predetermined distance from each other in one marginal portion outside the coordinate detection area; and
(3) a plurality of optical sensor elements arranged regularly in marginal portions outside the coordinate detection area, which marginal portions are other than the one marginal portion,
(4) the plurality of optical sensor elements including (i) the first optical sensor element which constitutes the foregoing first optical sensor circuit and (ii) the second optical sensor element which constitutes the foregoing second optical sensor circuit.

According to the configuration like above, that is, according to the configuration including: the two light sources provided at a predetermined distance from each other in the one marginal portion outside the coordinate detection area; and the plurality of optical sensor elements arranged regularly in the marginal portions outside the coordinate detection area which are other than the one marginal portion, the distances between the light sources and the optical sensor elements or the positions of the optical sensor elements relative to illuminance distribution formed in the coordinate detection area by light emitted from the light sources or the like vary depending on the positions in the marginal portions outside the coordinate detection area.

Under such circumstances, the first optical sensor element and the second optical sensor element may be in different conditions of reception of light, because the first optical sensor element and the second optical sensor element are provided in different positions in the marginal portions. If this is the case, in the two-dimensional coordinate detection apparatus having the above configuration, the threshold characteristic of the first optical sensor element and the threshold characteristic of the second optical sensor element become different from each other.

The difference between the threshold characteristics can be eliminated by the earlier-described configuration of the optical sensor circuit. Accordingly, the two-dimensional coordinate detection apparatus having the above configuration is capable of always maintaining high accuracy in detection. This makes it possible to always accurately detect two-dimensional coordinates.

Further, it is possible to provide an information processing apparatus that does not wrongly operates in response to a user's action of specifying coordinates and thus is easy to use, by providing the two-dimensional coordinate detection apparatus having the above configuration in the information processing apparatus. Such an information processing apparatus is for example an apparatus including a user interface via which a user inputs instructions etc. through a display screen, such as a mobile phone, a PDA (personal digital assistant), a laptop or desktop computer, an ATM (automatic teller machine), or a vending machine.

Moreover, the information processing apparatus is applicable to digital signage (such as electronic advertisement board, electronic bulletin board, electronic direction board and electronic information board) that is capable of rewriting information displayed thereon in real time through a communications network and allowing a user to carry out, from a display screen, some input etc. based on the displayed information.

In order to attain the above object, a method of refresh-driving an optical sensor element in accordance with the present invention is a method of refresh-driving an optical sensor element that is included in an optical sensor circuit for detecting, based on a change in the amount of light received when an object to be detected is placed in a coordinate detection area through which light passes, coordinates of a position of then object in the coordinate detection area, said method including: applying, to a first optical sensor element and a second optical sensor element each of which serves as the optical sensor element and which receive different amounts of light depending on their positions relative to a light source whose position is fixed so that the light source emits the light, control signals having respective different strengths according to the different amounts of light, thereby initializing threshold characteristics of the first and second optical sensor elements so that the threshold characteristics are close to the same initial characteristic, which threshold characteristics determine light sensitivities of the first and second optical sensor elements.

This makes it possible, as described earlier, to reduce variations in the threshold characteristics of the optical sensor elements caused by differences in amounts of received light, by supplying then control signals having different strengths according to the different amounts of the light. As such, it is possible to cause the optical sensor circuit to carry out accurate detection operation.

### Advantageous Effects of Invention

As has been described, the optical sensor circuit in accordance with the present invention includes wires for supplying, independently to optical sensor elements provided in respective different optical sensor circuits, respective control signals for initializing threshold characteristics. This brings about an effect of easily and accurately reducing variations in the threshold characteristics of the respective optical sensor elements.

Further, as has been described, the method of refresh-driving an optical sensor element in accordance with the present invention applies, to a plurality of optical sensor elements which receive different amounts of light depending on their positions relative to a light source whose position is fixed so that the light source emits light, control signals having respective different strengths according to the different amounts of light. This brings about an effect of initializing the threshold characteristics of the optical sensor elements so that the threshold characteristics are close to the same initial characteristic.

### Brief Description of Drawings

Fig. 1

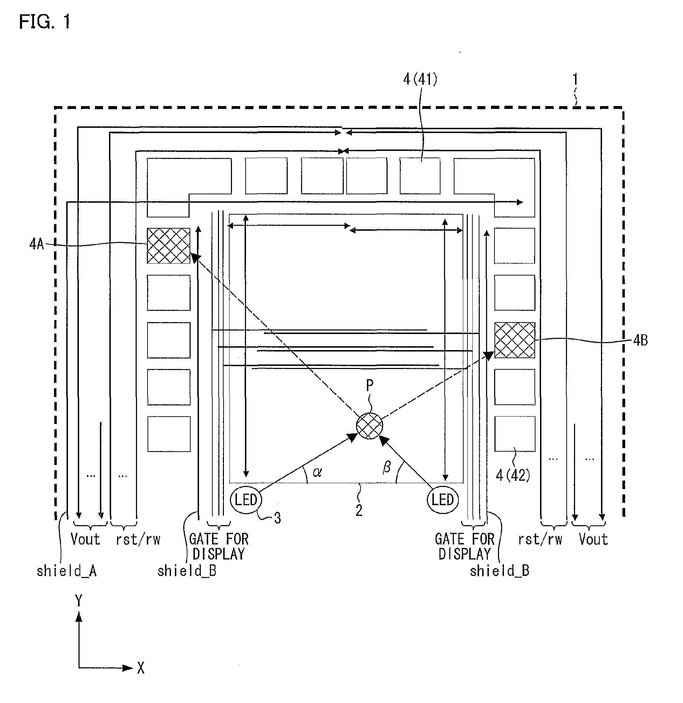

   Fig. 1 is a plan view schematically illustrating a configuration of a two-dimensional coordinate detection apparatus in accordance with the present invention.
Fig. 2

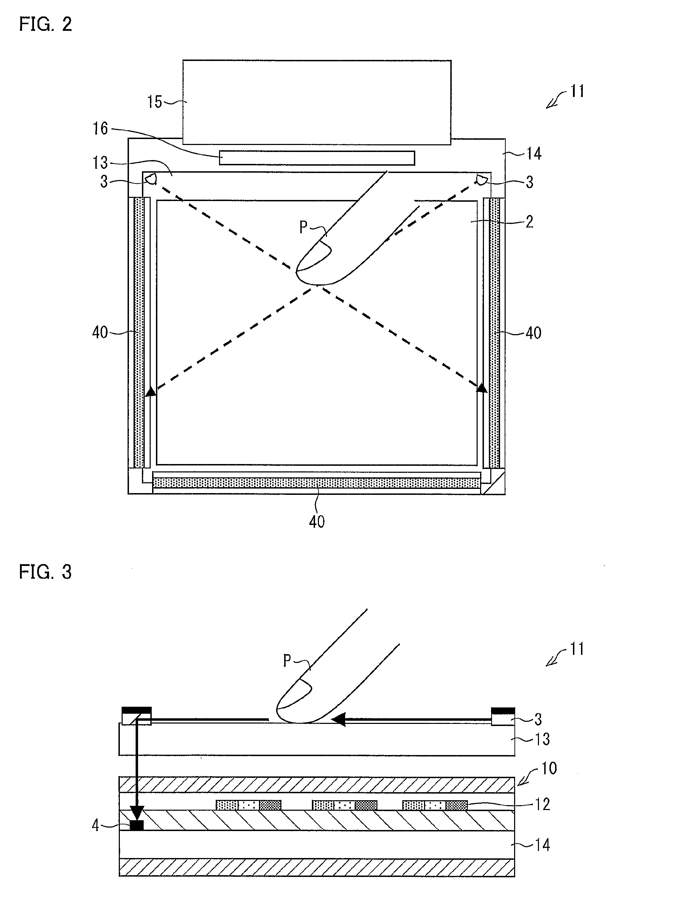

   Fig. 2 is a plan view schematically illustrating a configuration of a display region of an information processing apparatus including the two-dimensional coordinate detection apparatus.
Fig. 3
   Fig. 3 is a cross-sectional view schematically illustrating a cross section structure of the information processing apparatus.
Fig. 4
   Fig. 4 is an explanatory view showing a divergence angle of light emitted from a light source, observed in a case where the light source is provided at a corner of a rectangular coordinate detection area.
Fig. 5
   Fig. 5 is a view illustrating the result obtained by measuring illuminance distribution in a rectangular-shaped coordinate detection area, observed when an LED is provided at a corner of the coordinate detection area and is caused to emit light.
Fig. 6

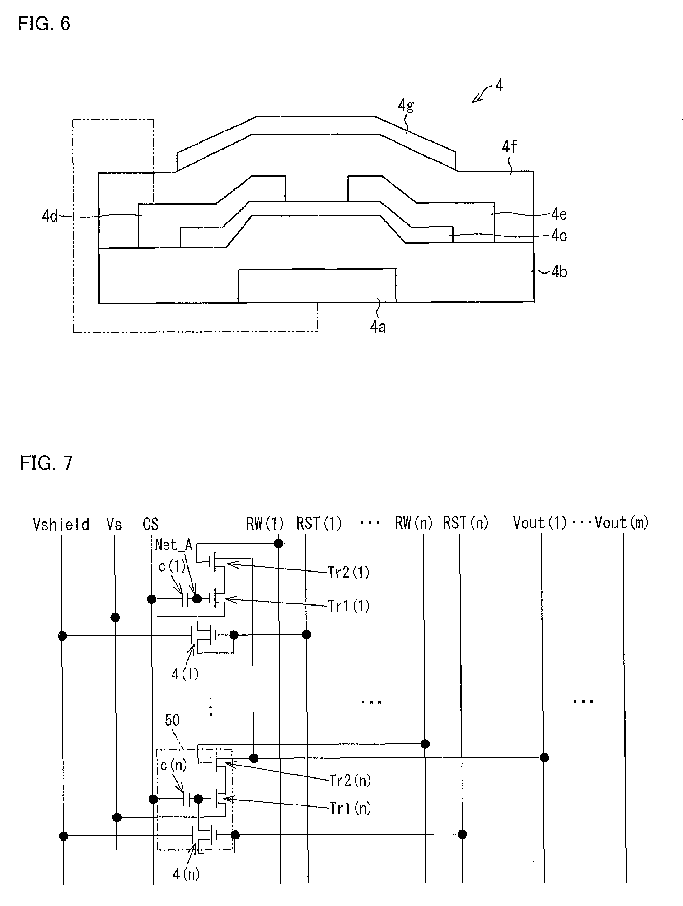

   Fig. 6 is a cross-sectional view illustrating a configuration of an optical sensor element.
Fig. 7
   Fig. 7 is a circuit diagram illustrating a configuration of an optical sensor circuit including (i) the optical sensor element and (ii) other circuit elements and various wires connected to the optical sensor element.
Fig. 8

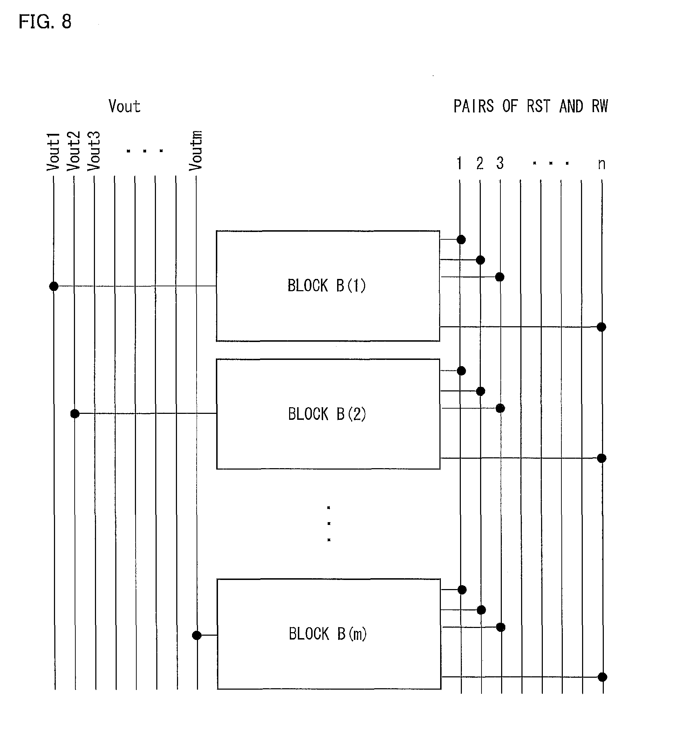

   Fig. 8 is a block diagram illustrating a configuration in which m blocks each constituted by n optical sensor circuits are connected in parallel with various wires.
Fig. 9

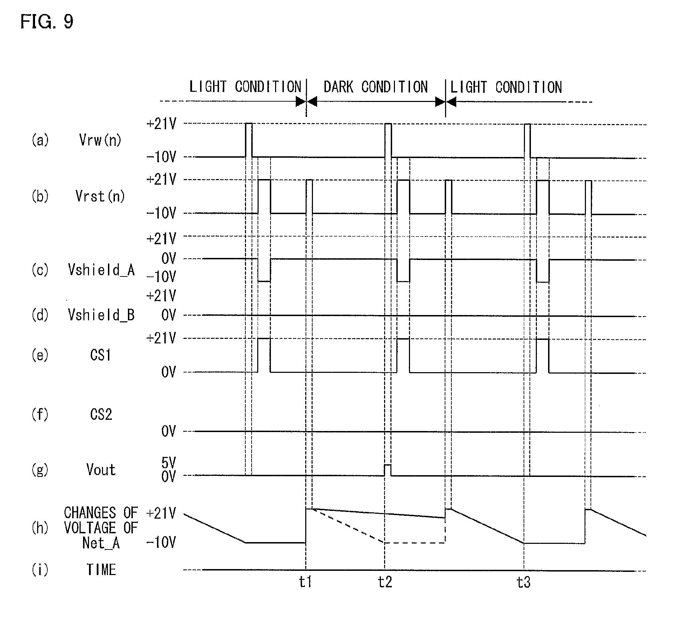

   Fig. 9 is a timing chart illustrating various signals related to operation of an optical sensor circuit.
Fig. 10

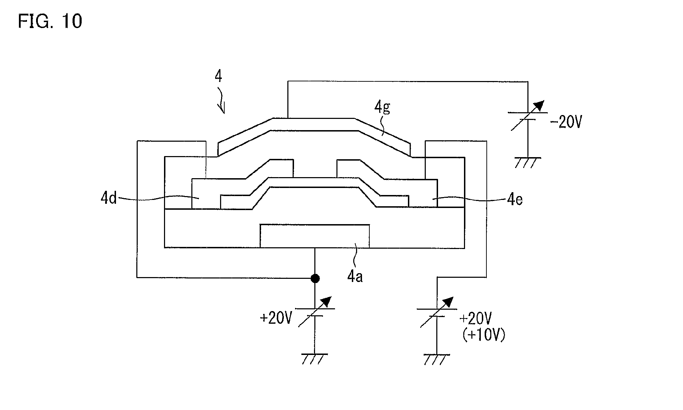

   Fig. 10 is an explanatory view showing the levels of voltages applied to electrodes of an optical sensor element, in a simulation of initializing the threshold characteristic of the optical sensor element.
Fig. 11

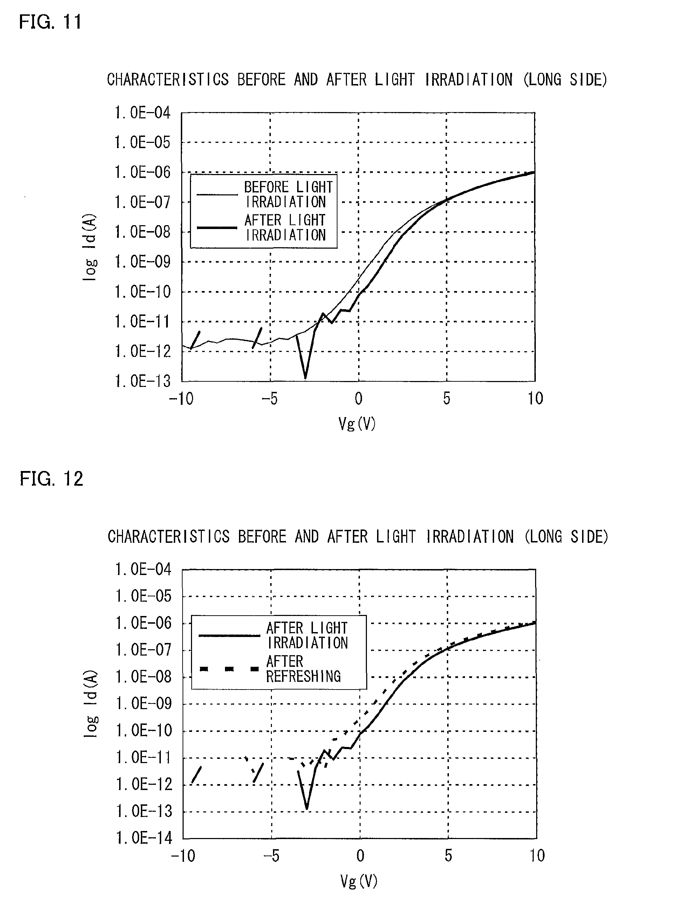

   Fig. 11 is a graph showing how the threshold characteristic shifts when an optical sensor element provided along a long side is irradiated with light.
Fig. 12
   Fig. 12 is a graph showing how the threshold characteristic of the optical sensor element provided along the long side is initialized by carrying out refreshing operation after irradiation with light.
Fig. 13

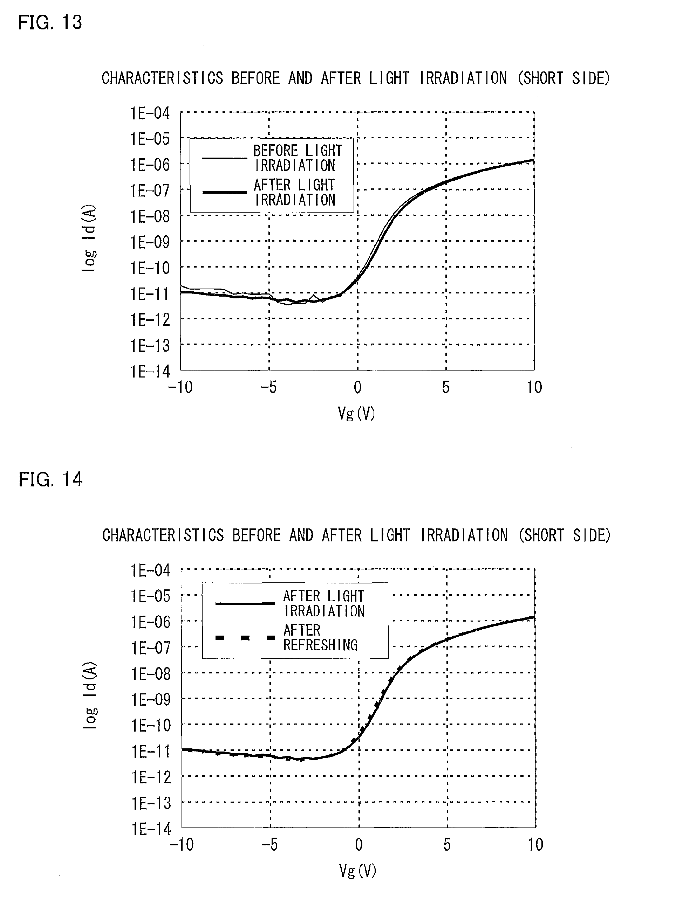

   Fig. 13 is a graph showing how the threshold characteristic shifts when an optical sensor element provided along a short side is irradiated with light.
Fig. 14
   Fig. 14 is a graph showing how the threshold characteristic of the optical sensor element arranged along the short side is initialized by carrying out refreshing operation after irradiation with light.
Fig. 15
   Fig. 15 is a plan view schematically illustrating a configuration of a conventional two-dimensional coordinate detection apparatus.
Fig. 16
   Fig. 16 is a side view schematically illustrating a configuration of the two-dimensional coordinate detection apparatus shown in Fig. 15.

### Description of Embodiments

The following description discusses embodiments of the present invention in detail. Note however that, unless otherwise specifically noted, the dimensions, materials, shapes and relative positions of constituents described in the embodiments are mere examples for description. The scope of the present invention is not limited to those described in the embodiments.

First, the following discusses a main point of a configuration for attaining the earlier-mentioned object, on which the present invention focuses.

### (Outline of configuration of two-dimensional coordinate detection apparatus)

Fig. 1 is a plan view schematically illustrating a configuration of a two-dimensional coordinate detection apparatus in accordance with the present invention. As illustrated in Fig. 1, the two-dimensional coordinate detection apparatus has a substrate area 1 where a coordinate detection area 2 associated with two-dimensional coordinates is provided. Outside the coordinate detection area 2, there are marginal portions where a light source 3, optical sensors each including an optical sensor element 4, and various wires are to be provided.

In one marginal portion of the marginal portions outside the coordinate detection area 2, there are two light sources 3 provided at a predetermined distance from each other. In the others of the marginal portions outside the coordinate detection area 2, there are a plurality of optical sensor elements 4 arranged regularly. Such a form of the two-dimensional coordinate detection apparatus is called light matrix (LM) system.

### (Outline of a method of coordinate detection)

When a pointer P (object to be detected) such as a person's finger or an input stylus pointing at a specific position in the coordinate detection area 2 is on the path of light emitted from the light sources 3 because the pointer P is near or in contact with the coordinate detection area 2 where the light passes through, an optical sensor element 4A that is on the extension of the line connecting one of the light sources 3 and the pointer P is blocked from the light. This causes a change in detection output of the optical sensor element 4A. Similarly, an optical sensor element 4B on the extension of the line connecting the other of the light sources 3 and the pointer P is blocked from the light. This causes a change in detection output of the optical sensor element 4B.

Consider a triangle whose vertices are the two light sources 3 and the pointer P and whose base is the one marginal portion where the two light sources 3 are provided. In this triangle, an angle α formed by the base and the pointer P and an angle β formed by the base and the pointer P are found by analyzing changes in detection outputs of the optical sensor elements 4. In this way, two-dimensional coordinates of the pointer P are found, based on the principle of triangulation, from the distance between the two light sources 3 (known value) and the angles α and β.

### (Confirmation of problems to be solved)

Under such circumstances, the phenomenon described earlier with reference to Fig. 4 becomes a problem. Specifically, in a case where one light source (e.g., LED) is provided at each of the corners A and B of a rectangular coordinate detection area and a plurality of optical sensor elements are arranged along three sides, i.e., an A-side short side, a B-side short side and a long side, optical sensor elements arranged along the long side opposite to the long side along which the two light sources are provided (such optical sensor elements hereinafter may be referred to as optical sensor elements along the long side) receive generally a larger amount of light than optical sensor elements arranged along the A-side short side and the B-side short side (such optical sensor elements hereinafter may be referred to as optical sensor elements along the short side).

The above explanation is applied to Fig. 1 as follows. Assume that (i) one of optical sensor elements 4 arranged along the X direction which is the horizontal direction of Fig. 1 in another marginal portion opposite to the one marginal portion where the two light sources 3 are provided is referred to as an optical sensor element 41 (first optical sensor element) and (ii) one of optical sensor elements 4 arranged along the Y direction orthogonal to the X direction in a marginal portion other than the one marginal portion and the another marginal portion opposite to the one marginal portion, i.e., in a marginal portion not opposite to the one marginal portion, is referred to as an optical sensor element 42 (second optical sensor element). In this case, the optical sensor element 41 receives a larger amount of light than the optical sensor element 42 does.

Therefore, threshold that determines light sensitivity of the optical sensor element 41 is prone to shifting as compared to that of the optical sensor element 42. That is, the threshold characteristics of the optical sensor elements 4 vary depending on the positions of the optical sensor elements 4 relative to the light sources 3 whose positions are fixed. This causes variations in light sensitivities of the optical sensor elements 4, and makes it impossible to accurately detect whether or not the optical sensor elements 4 have received the light emitted from the light sources 3. As a result, it becomes difficult to detect two-dimensional coordinates accurately.

### (Outline of configuration of optical sensor circuit)

In view of such circumstances, in order to eliminate variations in threshold characteristics, an optical sensor circuit in accordance with the present invention includes wires, via which it is possible to supply, independently to the respective optical sensor elements 41 and 42, control signals which correspond to the amounts by which the thresholds of the optical sensor elements 41 and 42 shift and which can initialize the thresholds so that the thresholds become equal to each other or substantially equal to each other.

More specifically, there are provided (i) a first wire for supplying, to an array of optical sensor elements 4 including the optical sensor element 41 and arranged in the X direction, a refresh signal Shield_A serving as a first control signal and (ii) a second wire for supplying, to an array of optical sensor elements 4 including the optical sensor element 42 and arranged in the Y direction, a refresh signal Shield_B serving as a second control signal (see Fig. 1). Note here that, in a similar manner, another second wire is provided to another array that is in parallel with and is opposite to the above array arranged in the Y direction.

Besides the first and second wires, in the marginal portions, there are provided (i) a wire for supplying a reset signal rst to the optical sensor elements 4, (ii) a wire for supplying a readout signal rw to the optical sensor elements 4 to read-out detection signals from the optical sensor elements 4 and (iii) a wire for taking out the detection signals from the optical sensor elements 4 as output signals Vout.

### (Configuration of information processing apparatus)

The two-dimensional coordinate detection apparatus is often integral with a display panel 10 having a function of displaying information so that the two-dimensional coordinate detection apparatus serves as a constituent of an information processing apparatus 11 (see Fig. 3, which illustrates a cross section structure of the information processing apparatus 11). In a case where the display panel 10 includes switching elements such as TFTs (thin film transistors) 12 for driving a display in pixels, e.g., in a case where the display panel 10 is an active matrix liquid crystal display panel, the display panel 10 includes (i) scan wires (gates for display in Fig. 1) for supplying, from a gate driver to the switching elements, a drive signal for turning ON/OFF a gate of each of the switching elements and (ii) source wires for supplying, from a source driver via the switching elements to the pixels, a voltage based on information to be displayed.

### (Specific configuration of display region)

Fig. 2 is a plan view schematically illustrating a display region of the information processing apparatus 11. Fig. 3 is a cross-sectional view schematically illustrating a cross section structure of the information processing apparatus. As illustrated in Figs. 2 and 3, two light sources 3 are attached to one marginal portion outside the coordinate detection area 2, which marginal portion is on a surface of a transparent plate 13 serving as a substrate of the two-dimensional coordinate detection apparatus. The light sources 3 can be for example infrared LEDs (light emitting diodes), near-infrared LEDs or white LEDs etc.

The display panel 10 is provided below the transparent plate 13. The optical sensor elements 4 and various wires related to an optical sensor circuit are provided on a substrate 14 of the display panel 10. In a case where the coordinate detection area 2 is in the form of a rectangle, the optical sensor elements 4 are arranged regularly along each of the three sides other than one side along which the two light sources 3 are provided. Such optical sensor elements 4 constitute a line sensor 40.

Right above the line sensor 40, a light path-changing optical system (e.g., prism) is provided on the surface of the transparent plate 13. The light path-changing optical system causes light emitted from the light sources 3 to travel in a direction toward the line sensor 40. Since the transparent plate 13 having thereon the light sources 3 and the optical system is placed on the display panel 10 containing the optical sensor circuit therein like above, the thickness of the information processing apparatus 11 can be reduced.

In an edge region of the substrate 14 on the light sources 3-side, an FPC (flexible printed circuit) 15 and a connector 16 are provided. The FPC and the connector 16 connect various wires related to the optical sensor circuit and to the switching elements etc. with an external circuit that supplies signals corresponding to the respective various wires.

Providing various elements and wires that constitute the optical sensor circuit monolithically on the substrate 14 makes it possible to reduce the area of a frame region in which the various elements and the wires are to be provided.

### (Configuration of optical sensor element)

Fig. 6 is a cross-sectional view illustrating a configuration of an optical sensor element 4. The optical sensor element 4 is constituted mainly by a thin film transistor having an inverted staggered structure. On an interlayer insulation film 4b covering a gate electrode 4a on the bottom side (i.e., on the substrate 14-side (see Fig. 3)), a semiconductor layer 4c is provided. On the semiconductor layer 4c, a source electrode 4d and a drain electrode 4e are provided so as to be in the same layer and to face each other via a gap (aperture) serving as a light receiving part. The optical sensor element 4 further includes, in addition to the above main constituents, a back gate electrode 4g provided on an interlayer insulation film 4f covering the semiconductor layer 4c, the source electrode 4d and the drain electrode 4e. The back gate electrode 4g is made from a transparent material so that light is allowed to pass through the back gate electrode 4g and reach the light receiving part of the thin film transistor.

Further, the optical sensor element 4 is constituted as a photodiode which has a diode structure where the gate electrode 4a and then source electrode 4d are electrically connected to each other (described layer).

The thin film transistor constituting the optical sensor element 4 is not limited to the inverted staggered structure, and therefore may have a staggered structure. In a case where the thin film transistor has a staggered structure, the back gate electrode 4g is provided on the bottom side.

### (Configuration of optical sensor circuit)

Fig. 7 is a circuit diagram illustrating a configuration of an optical sensor circuit 50 including (i) the optical sensor element 4 and (ii) other circuit elements and various wires connected to the optical sensor element 4. Note, however, that Fig. 7 shows a configuration in which *n* optical sensor circuits 50 are connected in parallel to various wires. The n optical sensor circuits 50 correspond to one of *m* blocks (described later with reference to Fig. 8).

The following description discusses in detail a configuration of the nth optical sensor circuit 50. The back gate electrode 4g (Fig. 6) of an optical sensor element 4(*n*) is connected with a wire Vshield which serves as the first wire or the second wire.

In a case where the optical sensor circuits 50 constitute a line sensor arranged in the X direction which is the horizontal direction of Fig. 1, each of the optical sensor circuits 50 corresponds to the first optical sensor circuit. Accordingly, the wire Vshield corresponds to the first wire for supplying the refresh signal Shield_A. On the other hand, in a case where the optical sensor circuits 50 constitute a line sensor arranged in the Y direction which is the vertical direction of Fig. 1, each of the optical sensor circuits 50 corresponds to the second optical sensor circuit. Accordingly, the wire Vshield corresponds to the second wire for supplying the refresh signal Shield_B.

Further, the gate electrode 4a (Fig. 6) of the optical sensor element 4(*n*) is connected with a wire RST(*n*) for supplying the reset signal rst.

The drain electrode 4e (Fig. 6) of the optical sensor element 4(*n*) is connected to a gate electrode of a thin film transistor Tr1(*n*). The gate electrode of the Tr1(*n*) is connected also with one terminal of a capacitor c(*n*). A junction of the drain electrode 4e, the gate electrode of the Tr1(*n*) and the one terminal of the capacitor c(*n*) is referred to as a node Net_A.

The other terminal of the capacitor c(*n*) is connected with a wire CS. To the wire CS, a constant voltage (e.g., 0 V) is applied so as to hold the voltage of the node Net_A via the capacitor c(*n*) at the time of sensing. Further, the wire CS can be used also to create an electric potential difference between the back gate electrode 4g and the drain electrode 4e at the time of refreshing the optical sensor element 4(*n*). The strength of the refresh signal Shield_A or the Shield_B applied to the wire Vshield can be controlled by applying, to the wire CS, a signal that assists the refreshing of the optical sensor element 4(n). This configuration is described later in detail.

Note that a wire CS connected to optical sensor circuits 50 (along the long side) arranged in the X direction is referred to as a wire CS1, whereas a wire CS connected to optical sensor circuits 50 (along the short side) arranged in the Y direction is referred to as a wire CS2.

The capacitor c(*n*) is provided according to how large a capacitance is needed for the node Net_A. If a capacitance of wires including the node Net_A is large enough, then no capacitor needs to be provided separately. The capacitor c(*n*) can be substituted by a parasitic capacitance between the wires including the node Net_A and other wires.

On the other hand, a source electrode of the Tr1(*n*) is connected with a wire Vs. To the wire Vs, a constant DC voltage (e.g., 5 V) is applied. The constant DC voltage makes it possible to output the output signal Vout having a constant voltage when the optical sensor element 4(*n*) detects light.

Further, a drain electrode of the Tr1(n) is connected with a source electrode of Tr2(*n*), and a drain electrode of the Tr2(*n*) is connected with a wire Vout(1). The wire Vout(1) is connected with an arithmetic circuit system where two-dimensional coordinates are found by calculation based on the output signal Vout.

Lastly, a gate electrode of the Tr2(*n*) is connected with a wire RW(*n*). To the wire RW(*n*), a constant voltage (e.g., 21 V) serving as the readout signal rw is applied. The constant voltage is applied in order to cause the optical sensor circuit 50 to output the output signal Vout.

The drain electrodes of Tr2(1) to Tr2(n) included in the respective *n* optical sensor circuits 50 are all connected with the same wire Vout(1). In response to the readout signals rw applied time-sequentially to the *n* optical sensor circuits 50 via respective corresponding wires RW(1) to RW(*n*), the *n* optical sensor circuits 50 sequentially output the output signals Vout to the wire Vout(1).

In this configuration, the Tr1(*n*) and Tr2(*n*) are blocked from light so that only the optical sensor element 4(*n*) receives light.

### (Block structure of optical sensor circuit)

Fig. 8 is a block diagram illustrating a configuration in which (i) *n* optical sensor circuits 50 are considered as one block and (ii) *m* blocks B(1) to B(*m*) are connected in parallel with the wires Vout(1) to Vout(m) and with the wires RST(1) to RST(*n*) and wires RW(1) to WR(*n*).

Note that the blocks B(1) to B(*m*) are obtained by dividing, into *m* blocks, *n* × *m* optical sensor circuits 50 arranged in a straight line along a side (short side or long side) of a rectangle.

The wires Vout(1) to Vout(*m*) may be provided so as to correspond to the respective blocks B(1) to B(*m*). Further, for example, the wire RST(*n*) and the wire RW(*n*) are shared by the blocks B(1) to B(*m*). Accordingly, the configuration shown in Fig. 8 is effective in reducing the number of wires.

### (Operation of optical sensor circuit)

Fig. 9 is a timing chart showing various signals related to operation of an optical sensor circuit 50.
(1) First, at time t1 (at a point in time when sensing operation starts) shown in (i) of Fig. 9, a pulsed reset signal rst(*n*) is applied to the gate electrode 4a of the optical sensor element 4(*n*). The reset signal rst(*n*) is for example such that its low level is -10 V and its high level is +21 V (see (b) of Fig. 9). In response to this, the optical sensor element 4(*n*) having a diode structure conducts (turned ON). Then, as shown in (h) of Fig. 9, the node Net_A is charged to +21 V and initialized. Note that the voltages of the wires CS1 and CS2 are kept constant (e.g., 0 V) during the sensing operation.
   This causes the Tr1(*n*), whose gate electrode is connected to the node Net_A, to be turned ON.
(2) Meanwhile, after the voltage of the node Net_A is initialized, the voltage of the reset signal rst(*n*) drops to -10 V. This brings the optical sensor element 4(*n*) into a nonconducting state (turned OFF).
(3) Assume that, under such a condition, the optical sensor element 4(*n*) is brought into a dark condition in which it does not receive light. The dark condition is a condition in which, as described with reference to Fig. 1, light from the light sources 3 does not reach the optical sensor element 4A or the optical sensor element 4B because of a pointer P placed in the coordinate detection area 2.

When the optical sensor element 4(*n*) is in the dark condition, in the optical sensor element 4(*n*), almost no leak current or only a little leak current passes from the node Net_A to the wire RST(*n*). Accordingly, the voltage of the node Net_A almost does not change or decreases by only a small amount. This causes the Tr1(*n*) to remain in the ON state for a certain period of time.
(4) During the certain period of time, a readout period is provided during which a light detection condition is read out from the optical sensor circuit 50. That is, at time t2, a pulsed readout signal rw(*n*) in which for example its low level is -10 V and its high level is +21 V is applied to the gate electrode of the Tr2(*n*) (see (a) of Fig. 9).

This causes the Tr2(*n*) to be ON during the readout period. Accordingly, the DC voltage (e.g., 5 V) being applied to the wire Vs is outputted, as an output signal Vout, to the wire Vout(1) via the Tr1(*n*) and Tr2(*n*) (see (g) of Fig. 9).

That is, the optical sensor circuit 50 outputs, when the optical sensor element 4(*n*) is blocked by the pointer P from light, the output signal Vout indicating that the pointer P is detected.
(5) On the other hand, assume that, when the voltage of the node Net_A is initialized in the above (2), the optical sensor element 4(*n*) is not in the dark condition but in a light condition where it receives light. It is not necessary to say that the light condition is such that the optical sensor element 4 keeps receiving light from the light sources 3 because no pointer P is placed in the coordinate detection area 2 or the pointer P placed in the coordinate detection area 2 does not block the light emitted from the light sources 3.

When the optical sensor element 4(*n*) is in the light condition, in the optical sensor element 4(*n*), a leak current having a level corresponding to the amount of received light passes from the node Net_A to the wire RST(*n*). This causes the voltage of the node Net_A to gradually decrease (see (h) of Fig. 9). How much the voltage decreases depends on the amount of the received light. Since the voltage of the node Net_A decreases, the Tr1(*n*) is switched from ON to OFF.
(6) As a result, since the Tr1(*n*) is in OFF state, the DC voltage being applied to the wire Vs is not outputted to the wire Vout(1) (see (g) of Fig. 9) even when the readout signal rw(*n*) of +21 V (see (a) of Fig. 9) is applied to the gate electrode of the Tr2(*n*) at time t3 (see (i) of Fig. 9) during the readout period.

That is, when the optical sensor element 4(*n*) is receiving light, the optical sensor circuits 50 keep the output signal Vout at a low level.

Under such circumstances, if the threshold of the optical sensor element 4(*n*) shifts in a positive direction due to accumulation of effects of light irradiation (described later with reference to Fig. 11), the output from the optical sensor element 4(*n*) decreases. If this is the case, the voltage of the node Net_A does not reach +21 V even when the reset signal rst(*n*) of +21 V is applied to the gate electrode 4a. If the threshold of the optical sensor element 4(*n*) further shifts in the positive direction, then the Tr1(*n*) is no longer turned ON. Accordingly, the DC voltage being applied to the wire Vs is no longer outputted to the wire Vout(1). That is, if this is the case, even when the optical sensor circuit 50 is in the dark condition, it does not output a detection signal in the same manner as in the light condition. Such an optical sensor circuit 50 no longer functions as an optical sensor.
(7) Then, a refreshing period during which the threshold of the optical sensor element 4(*n*) is initialized is provided after the readout period, thereby the refreshing operation is carried out. The refreshing operation is carried out such that the reset signal rst(*n*) of +21 V is applied to the gate electrode 4a of the optical sensor element 4(*n*) while an electric potential difference is created between the back gate electrode 4g and the drain electrode 4e. For example in a case where the threshold of the optical sensor element 4(*n*) shifts in the positive direction, a positive voltage is applied to the gate electrode 4a to turn ON the optical sensor element 4(*n*), a negative voltage is applied to the back gate electrode 4g, and a positive voltage is applied to the drain electrode 4e so that an electric potential difference is created. As the electrical potential difference becomes large, the effect of returning the threshold characteristic to the initial state becomes large.

In order to create a necessary electric potential difference between the back gate electrode 4g and the drain electrode 4e, a refresh signal Shield is applied to the back gate electrode 4g of the optical sensor element 4(*n*). Note here that the level of the voltage of the refresh signal Shield is changed according to variations in the amounts of light received by the optical sensor elements 4, which variations are due to the positions of the optical sensor elements 4 relative to the light sources 3.

Specifically, the optical sensor elements 4 arranged in the X direction which is the horizontal direction of Fig. 1 (i.e., optical sensor elements along the long side described with reference to Fig. 4) receive a larger amount of light and their thresholds shift by a larger amount than the optical sensor elements 4 arranged in the Y direction which is the vertical direction of Fig. 1 (i.e., optical sensor elements along the short side described with reference to Fig. 4). Therefore, the absolute value of the voltage of the refresh signal Shield_A to be supplied to the optical sensor elements 4 arranged in the X direction is set to be larger than that of the voltage of the refresh signal Shield_B to be applied to the optical sensor elements 4 arranged in the Y direction.

In a case where it is difficult to create an electric potential difference large enough for refreshing only with the refresh signal Shield_A or with the refresh signal Shield_B, an auxiliary voltage may be applied to the aforementioned wires CS1 and CS2. In the present embodiment, the wire CS is used in an auxiliary manner because a power source employed is the one that generates voltages between -10 V and +21 V.
(c) of Fig. 9 shows the refresh signal Shield_A whose voltage level is changed from 0 V to -10 V during the refreshing period. (d) of Fig. 9 shows the refresh signal Shield_B whose voltage level is kept at 0 V during the refreshing period. Here, an auxiliary signal of +21 V is applied to the wire CS1 in correspondence with the refresh signal Shield_A to create an electric potential difference of 31 V between the back gate electrode 4 g and the drain electrode 4e, whereas the electric potential of the wire CS2 is kept at 0 V according to the refresh signal Shield_B (see (e) of Fig. 9).

The levels of the voltages of the refresh signal Shield_A and of the auxiliary signal for the wire CS1 may be controlled as appropriate in consideration of voltages that can be generated by the power source so that an electric potential difference necessary for refreshing is created between the back gate electrode 4g and the drain electrode 4e. The auxiliary signal for the wire CS is not essential for refreshing operation.

As described above, the refreshing operation for the optical sensor elements 4 arranged in the Y direction may be omitted by keeping the voltage of the refresh signal Shield_B at 0 V, in a case where the amounts by which the thresholds of these optical sensor elements 4 shift are so small that can be ignored.

If the refresh signal Shield_A having a high strength is applied equally to an optical sensor element 4 whose threshold shifts by a large amount and to an optical sensor element 4 whose threshold shifts by a small amount, the optical sensor element 4 whose threshold shifts by a small amount will have too small a threshold. In this regard, the present invention provides wires that are independent from each other, which wires are capable of supplying, to the optical sensor element 4 whose threshold shifts by a large amount and to the optical sensor element 4 whose threshold shifts by a small amount, respective refresh signals having strengths corresponding to the amounts by which the thresholds of the respective optical sensor elements 4 shift. This brings about an effect of preventing the above-mentioned excessive refreshing.

The refreshing operation is preferably set to be carried out periodically, for example once in every frame period of an image signal. Further, the refreshing operation may be set to be carried out when the information processing apparatus 11 is powered on.

The refreshing operation as has been described makes it possible to initialize the thresholds of all the optical sensor elements 4 to the same initial threshold or to thresholds close to the same initial threshold, regardless of positions of the optical sensor elements 4 relative to the light source 3. As a result, the light sensitivities of all the optical sensor elements 4 are kept constant. This makes it possible to maintain a state in which the pointer P can be detected accurately.

Note that it is possible to employ a configuration in which the reset signal rst(*n*) and the refresh signal Shield stop being generated in correspondence with the output of the output signal Vout. For example, in a case where the information processing apparatus 11 is a portable gaming device and a user enjoys a game in which the user needs to frequently place the pointer P in the coordinate detection area 2, a reset signal rst(*n*) and a refresh signal Shield are not generated for an optical sensor element 4 that detected the pointer P, i.e., for the optical sensor element 4 that did not receive light. For example, the configuration may be such that, in a case where an output signal Vout is outputted as shown in (g) of Fig. 9, the refreshing operation that was to be carried out during the dark condition is not carried out. This makes it possible to obtain an effect of reducing power consumed by the information processing apparatus 11.

There are two methods of setting the voltage of the refresh signal Shield. A first method is a method by which the voltage is set to 0 V and a refresh value other than 0 V (see (c) of Fig. 9). A second method is a method by which the voltage is set to a predetermined voltage other than 0 V and a refresh value. Note, however, that it is preferable to employ the first method, because, in a case of the second method, an optical sensor element 4 seems to be affected by the voltage other than 0 V applied to its back gate electrode 4g.

### (Evaluation of refreshing operation)

The refreshing operation having been described was evaluated by a simulation. An optical sensor element 4 was irradiated with light for about 1 hour, and thereafter a voltage was applied to each electrode of the optical sensor elements 4, which voltage was corresponding to the each electrode (see Fig. 10). Specifically, (i) a DC voltage of +20 V was applied to each of the gate and source electrodes 4a and 4d electrically connected to each other, (ii) a DC voltage of - 20 V was applied to the back gate electrode 4 g, and (iii) a DC voltage of +20 V was applied to the drain electrode 4e in a case where the optical sensor element 4 was provided along the long side or a DC voltage of +10 V was applied to the drain electrode 4e in a case where the optical sensor element 4 was provided along the short side, thereby the optical sensor element 4 was refreshed.

Figs. 11 and 13 are graphs showing how the threshold characteristics shift when the optical sensor element 4 along the long side and the optical sensor element 4 along the short side are irradiated with light, respectively.

The following are clear from the graphs shown in Figs. 11 and 13.
(1) The threshold characteristics of both the optical sensor elements 4 along the long side and along the short side shift in a positive direction (toward the right on the graphs) and the thresholds are large in a positive direction, after light irradiation.
(2) The threshold characteristic of the optical sensor element 4 along the long side, which receives a larger amount of light than the optical sensor element 4 along the short side, shifts by a larger amount than that of the optical sensor element 4 along the short side.

As a result, variations occur in the light sensitivities of the optical sensor elements 4 along the long side and along the short side. This makes it impossible to accurately detect the presence of the pointer P.

On the other hand, Figs. 12 and 14 are graphs showing how the threshold characteristics of the optical sensor elements 4 along the long side and the short side are initialized by carrying out the refreshing operation after light irradiation.

As is clear from a comparison between the graphs of Figs. 12 and 14 and the graphs of Figs. 11 and 13, the threshold characteristics of both the optical sensor element 4 along the long side and the optical sensor element 4 along the short side shift in a negative direction (toward the left on the graphs) and the thresholds return to the initial threshold characteristics by the refreshing operation.

The reason therefor is as follows. As described earlier, the strengths of the refresh signal Shield_A and the refresh signal Shield_B are changed according to the amounts by which the threshold characteristics shift. Accordingly, the threshold characteristics having shifted by different amounts are appropriately initialized.

### (Other example of refreshing operation)

The foregoing description discussed a configuration in which (i) a plurality of optical sensor elements 4 arranged along three sides of the rectangular-shaped coordinate detection area 2 are roughly classified into two types: optical sensor elements 4 along the long side and optical sensor elements along the short side and (ii) the strength of the refresh signal Shield_A to be supplied to the optical sensor elements 4 along the long side is larger than that of the refresh signal Shield_B to be supplied to the optical sensor elements 4 along the short side.

Note, however, that another configuration may be employed in which the optical sensor elements arranged around the coordinate detection area are classified into a larger number of types and the strengths of refresh signals supplied to the respective types are set according to the amounts of light that the optical sensor elements receive. Further, the shape of the coordinate detection area viewed from above is not limited to a rectangle, and therefore may be any shape provided that the principle of triangulation can apply.

The another configuration is achieved by, in advance, (i) measuring illuminance distribution in the coordinate detection area by providing two light sources in one marginal portion outside the coordinate detection area and causing the light sources to emit light and (ii) finding the amounts of light received by the respective plurality of optical sensor elements arranged around the coordinate detection area.

Fig. 5 shows the result obtained by measuring the illuminance distribution in the rectangular-shaped coordinate detection area, observed when for example an LED is provided at a corner of the coordinate detection area and is caused to emit light. The LED used in this measurement has emission characteristics such that a half-power angle is 55 degrees. The numeric values on the vertical axis and the horizontal axis of Fig. 5 represent the length of a short side and the length of a long side, respectively. The coordinates of the LED are (x, y) = (0, 0).

It is clear from the result that (i) a quadrant with its center at the LED shows the maximum illuminance of 5000 lx, (ii) the illuminance gradually attenuates as a zonal circular arc goes away from the quadrant and (iii) the illuminance in the vicinity of the short side corresponding to the B-side short side shown in Fig. 4 is the minimum illuminance of 500 1x.

Fig. 5 shows illuminance distribution observed when the number of LEDs is one. Note however that, by providing another LED at another corner and measuring illuminance distribution under the condition where two LEDs are ON, it is possible to find illuminance distribution in the A-side short side, the B-side short side and the long side shown in Fig. 4. It is possible to determine, based on the illumination distribution, the amount of light to be received by each of the optical sensor elements arranged along the A-side short side, B-side short side and long side. This makes it possible to determine a relationship between the amounts of light to be received and the amounts by which the threshold characteristics shift. As such, it is possible to set, for each of the optical sensor elements, the strength of the refresh signal to be applied to the back gate electrode of the each of the optical sensor elements.

Note however that, if the strength of the refresh signal is to be set for each of the optical sensor elements, too large a number of wires Vshield for supplying refresh signals are required. In view of this, as described with reference to Fig. 8, a configuration may be employed in which a plurality of optical sensor circuits are divided into blocks and a wire Vshield for supplying refresh signals having the same strength to each of the blocks is provided for the each of the blocks. This makes it possible to achieve, while reducing the number of wires Vshield, more accurate two-dimensional coordinate detection that does not depend on the positions of the optical sensor elements relative to the light sources.

The following are additional descriptions of the present invention.
(1) The optical sensor circuit in accordance with the present invention is configured such that the first optical sensor element and the second optical sensor element receive different amounts of light depending on their positions relative to a light source whose position is fixed so that the light source emits the light.

According to the configuration, the first and second optical sensor elements receive different amounts of light. Therefore, the threshold characteristics of the first and second optical sensor elements shift from the initial characteristic by different amounts.

Thus, the configuration of the present invention is quite effective for an optical sensor circuit in which the above phenomenon inevitably occurs depending on the positions of the first and second optical sensor elements relative to the light sources.

(2) The optical sensor circuit in accordance with the present invention is configured such that, in a case where the first optical sensor element receives a larger amount of light than the second optical sensor element does, strength of the first control signal is set to be higher than strength of the second control signal.

According to the configuration, the threshold characteristic of the optical sensor element that receives a larger amount of light shifts by a larger amount than the threshold characteristic of the optical sensor element that receives a smaller amount of light. In view of this, the first control signal having a relatively higher strength is supplied to the first optical sensor element that receives a larger amount of light, whereas the second control signal having a relatively lower strength is supplied to the second optical sensor element that receives a smaller amount of light. This makes it possible to reduce variations in the threshold characteristics of the optical sensor elements accurately according to how large the variations are.

(3) The optical sensor circuit in accordance with the present invention is configured such that each of the first and second optical sensor elements is a thin film transistor including a source electrode, a drain electrode, a gate electrode and a back gate electrode, the source electrode being connected with the gate electrode; the first wire is connected to the back gate electrode of the first optical sensor element; and the second wire is connected to the back gate electrode of the second optical sensor element.

In the above configuration, the back gate electrode is a general term for an electrode of the thin film transistor, which electrode is provided so as to face the gate electrode via an active layer. For example, in a case where the thin film transistor has a top gate structure (staggered structure), the back gate electrode is provided on the bottom side, i.e., on the substrate-side. In a case where the thin film transistor has a bottom gate structure (inverted staggered structure), the back gate electrode is provided on the top side.

When a voltage serving as the control signal is applied to such a back gate electrode, the channel of the thin film transistor changes. This makes it possible to control the threshold of the thin film transistor.

Accordingly, the configuration makes it possible to provide a specific configuration to initialize the threshold characteristic of an optical sensor element including a thin film transistor.

(4) The two-dimensional coordinate detection apparatus in accordance with the present invention is configured such that: the first optical sensor element is provided in another marginal portion that is opposite to the one marginal portion where the two light sources are provided; the second optical sensor element is provided in still another marginal portion that is not opposite to the one marginal portion where the two light sources are provided; and the first control signal supplied to the first optical sensor element has a strength higher than strength of the second control signal supplied to the second optical sensor element.

According to the configuration, the first optical sensor element is opposite to the light source to a greater extent than the second optical sensor element. Therefore, the first optical sensor element receives a larger amount of light than the second optical sensor element does. Accordingly, the threshold characteristic of the first optical sensor element shifts by a larger amount than that of the second optical sensor element.

In view of the circumstances, the strength of the first control signal to be supplied to the first optical sensor element is set to be higher than that of the second control signal to be supplied to the second optical sensor element. This makes it possible to cause the threshold characteristics of the first and second optical sensor elements to be close to the same initial characteristic.

The present invention is not limited to the descriptions of the respective embodiments, but may be altered within the scope of the claims. An embodiment derived from a proper combination of technical means disclosed in different embodiments is encompassed in the technical scope of the invention.

### Industrial Applicability

The present invention is suitably applicable to apparatuses each including a user interface via which a user inputs instructions etc. through a display screen, such as a mobile phone, a PDA, a laptop or desktop computer, an ATM, a vending machine and digital signage (such as electronic advertisement board, electronic bulletin board, electronic direction board and electronic information board).

### Reference Signs List

- 2: Coordinate detection area
- 3: Light source
- 4a: Gate electrode
- 4d: Source electrode
- 4e: Drain electrode
- 4g: Back gate electrode
- 11: Information processing apparatus
- 40: Line sensor (a plurality of optical sensor elements)
- 41: Optical sensor element (first optical sensor element)
- 42: Optical sensor element (second optical sensor clement)
- 50: Optical sensor circuit
- P: Pointer (object to be detected)
- Shield_A: Refresh signal (first control signal)
- Shield_B: Refresh signal (second control signal)
- Vshield: (First wire or second wire)

## Claims

1. An optical sensor circuit for detecting, based on a change in the amount of light received when an object to be detected is placed in a coordinate detection area through which light passes, coordinates of a position of the object in the coordinate detection area,
said optical sensor circuit, comprising:
a first optical sensor circuit including a first optical sensor element;
a second optical sensor circuit including a second optical sensor element;
a first wire to which a first control signal is supplied, the first control signal initializing a threshold characteristic that determines light sensitivity of the first optical sensor element; and
a second wire to which a second control signal is supplied independently of the first control signal, the second control signal initializing a threshold characteristic that determines light sensitivity of the second optical sensor element.

2. The optical sensor circuit according to claim 1, wherein the first optical sensor element and the second optical sensor element receive different amounts of light depending on their positions relative to a light source whose position is fixed so that the light source emits the light.

3. The optical sensor circuit according to claim 2, wherein, in a case where the first optical sensor element receives a larger amount of light than the second optical sensor element does, strength of the first control signal is set to be higher than strength of the second control signal.

4. The optical sensor circuit according to any one of claims 1 through 3, wherein:
each of the first and second optical sensor elements is a thin film transistor including a source electrode, a drain electrode, a gate electrode and a back gate electrode, the source electrode being connected with the gate electrode;
the first wire is connected to the back gate electrode of the first optical sensor element; and
the second wire is connected to the back gate electrode of the second optical sensor element.

5. A two-dimensional coordinate detection apparatus, comprising:
a coordinate detection area associated with two-dimensional coordinates;
two light sources provided at a predetermined distance from each other in one marginal portion outside the coordinate detection area; and
a plurality of optical sensor elements arranged regularly in marginal portions outside the coordinate detection area, which marginal portions are other than the one marginal portion,
the plurality of optical sensor elements including (i) the first optical sensor element which constitutes the first optical sensor circuit recited in any one of claims 1 through 4 and (ii) the second optical sensor element which constitutes the second optical sensor circuit recited in any one of claims 1 through 4.

6. The two-dimensional coordinate detection apparatus according to claim 5, wherein:
the first optical sensor element is provided in another marginal portion that is opposite to the one marginal portion where the two light sources are provided;
the second optical sensor element is provided in still another marginal portion that is not opposite to the one marginal portion where the two light sources are provided; and
the first control signal supplied to the first optical sensor element has a strength higher than strength of the second control signal supplied to the second optical sensor element.

7. An information processing apparatus comprising a two-dimensional coordinate detection apparatus recited in claim 5 or 6.

8. A method of refresh-driving an optical sensor element that is included in an optical sensor circuit for detecting, based on a change in the amount of light received when an object to be detected is placed in a coordinate detection area through which light passes, coordinates of a position of the object in the coordinate detection area,
said method, comprising:
applying, to a first optical sensor element and a second optical sensor element each of which serves as the optical sensor element and which receive different amounts of light depending on their positions relative to a light source whose position is fixed so that the light source emits the light, control signals having respective different strengths according to the different amounts of light, thereby initializing threshold characteristics of the first and second optical sensor elements so that the threshold characteristics are close to the same initial characteristic, which threshold characteristics determine light sensitivities of the first and second optical sensor elements.
